# EUROPEAN PATENT SPECIFICATION

(11) **EP 4 338 584 B1**
(45) Date of publication and mention of the grant of the patent: **31.12.2025**
(21) Application number: 23164157.2
(22) Date of filing: 24.03.2023
(51) Int. Cl.: A01G 24/60

(54) **CULTURE MEDIUM FORMING DEVICE AND OPERATING METHOD THEREOF**
VORRICHTUNG ZUR BILDUNG EINES KULTURMEDIUMS UND BETRIEBSVERFAHREN DAFÜR
DISPOSITIF DE FORMATION DE MILIEU DE CULTURE ET SON PROCÉDÉ DE FONCTIONNEMENT

(30) Priority: 19.09.2022 CN 202211147669
(43) Date of publication of application: 20.03.2024
(73) Proprietor: YesHealth Agri-Biotechnology Co., Ltd., Taoyuan City 338009 (TW)
(72) Inventor: TSAI, Weng-Chin, 338009 Taoyuan City (TW); WENG, Shou-Ping, 338009 Taoyuan City (TW); ZHONG, Xin-Liang, 338009 Taoyuan City (TW)
(74) Representative: Laddé, Jurre Gerard

(56) References cited:
- JP-A- 2013 039 040
- JP-B2- 4 861 062

## Description

### Field

The invention relates to a culture medium forming apparatus and operation method thereof, particularly to a technology field of agriculture, suitable for the standardized production.

### Background

For the conventional technology, the crop yield of soil culture is easy to be affected due to the change of the nature environment and the unstableness of the climate. Furtherly, if considering the unexpected natural disaster, pest damage, environment pollution further, the conventional soil culture cannot meet the quality requirement of the cultivation gradually.

For resolving the above problems, hydroponics is provided for cultivation. For the conventional hydroponics, the nutrient solution is used to fill a container, and then the seed is accommodated in a carrier, such as a sponge, inside the container. But there will be a lot of unrecycled sponge generated in the above way. Besides, sponge affects the growth of the plant's root. Therefore, the culture medium technique which can provide the functions of the nutrient solution and sponge and avoid the problems of the root's growth and not recycling related to the sponge is invented.

Because of the limitation of the culture medium's characteristics, it is too difficult to form any shape of the culture medium for rapid mass production. Therefore, it is necessary to provide a culture medium forming apparatus and operating method thereof for mass production and stable quality.

JP 4 864062 B2 discloses a culture medium forming apparatus and an operating method thereof according to the preamble of claims 1 and 13, respectively.

### Summary

To resolve the problems mentioned above, a culture medium forming apparatus and operating method thereof suit for mass production are provided.

The invention provides a culture medium forming apparatus as defined in claim 1, comprising: a liquid-injection chamber, containing a culture medium and comprising a gel-pushing rod; a cooling chamber, located below the liquid-injection chamber, and comprising a gel-injection tube, wherein the gel-injection tube is located corresponding to the gel-pushing rod, and the gel-pushing rod locates at a first side of the gel-injection tube; a cutting element, located below the cooling chamber, wherein the gel-pushing rod is capable of pushing the culture medium to pass through the gel-injection tube, characterized in that it further comprises a thermal insulation element, located between the liquid-injection chamber and the cooling chamber, and comprising a first through hole, wherein the gel-pushing rod can pass through the first through hole.

In an embodiment, the liquid-injection chamber comprises: a liquid inlet port, for supplying the culture medium; and a liquid outlet port, outputting the culture medium.

In an embodiment, a liquid storage container is connected to the liquid inlet port and the liquid outlet port.

In an embodiment, the liquid storage container comprises a heating apparatus for heating the culture medium in the liquid storage container.

In an embodiment, the first thermometer is located in the liquid outlet port, for measuring the temperature of the culture medium.

In an embodiment, the cooling chamber comprises a cooling liquid inlet port and a cooling liquid outlet port. The cooling liquid inlet port provides the cooling liquid, and the cooling liquid outlet port discharges the cooling liquid.

In an embodiment, the second thermometer is located in the cooling liquid inlet port, for measuring the temperature of the cooling liquid.

In an embodiment, the third thermometer is located in the liquid storage container, for measuring the temperature of the cooling liquid in the liquid storage container.

In an embodiment, a pressing plate is deployed. The pressing plate comprises the second through hole corresponding to the gel-pushing rod. The gel-pushing rod is allowed to pass through the second through hole.

In an embodiment, the pressing plate comprises the sealing element at the side facing the thermal insulation element.

In an embodiment, the thermal insulation element comprises a vacuum chamber.

In an embodiment, a power unit is deployed, for driving the gel-pushing rod and the pressing plate in the liquid-injection chamber.

The invention, in an embodiment, provides, according to claim 13, a method for operating a culture medium forming apparatus, comprising: a liquid inlet port providing a culture medium for a liquid-injection chamber; a gel-pushing rod pushing the culture medium toward a first side of a gel-injection tube, characterized in that the gel-pushing rod is in the liquid-injection chamber, the gel-injection tube is in a cooling chamber, and the cooling chamber is below the liquid-injection chamber; a cutting element cutting a part of the culture medium injected from a second side of the gel-injection tube in a length, characterized in that the method further comprises: providing a thermal insulation element between the liquid-injection chamber and the cooling chamber, wherein the thermal insulation element comprises a vacuum chamber.

In an embodiment, the cooling chamber comprises a cooling liquid inlet port and a cooling liquid outlet port. The cooling liquid enters the cooling chamber through the cooling liquid inlet port, and is discharged out of the cooling chamber through the cooling liquid inlet port.

In an embodiment, a pressing plate comprises the second through hole corresponding to the gel-pushing rod, allowing the gel-pushing rod to pass through the second through hole. The pressing plate moves toward the gel-injection tube before the gel-pushing rod moves toward the gel-injection tube.

In an embodiment, the pressing plate comprises a sealing element at the side facing the thermal insulation element. The sealing element is seamlessly connected to the first through hole.

In an embodiment, the pressing plate moves back before the gel-pushing rod moves back, after the cutting element cutting the part of the culture medium injected from the second side of the gel-injection tube in the length.

In an embodiment, a liquid storage container is deployed and the culture medium in formed a liquid state, then the culture medium in the liquid state is provided for the liquid-injection chamber through the liquid inlet port.

In an embodiment, a heating apparatus is deployed for heating the culture medium in the liquid storage container.

Compared with the prior art, the invention, coordinating the gel-pushing rod and the pressing plate, can prevent the culture medium in the gel-injection tube from forming the hollow area caused by pressure.

### Brief Description of Drawings

Fig. 1 illustrates the side view of the culture medium forming apparatus according to the invention.
Fig. 2 illustrates the top view of the thermal insulation element.
Fig. 3 illustrates the top view of the pressing plate.
Fig. 4~9 illustrate the operation of the culture medium forming apparatus.
Fig. 10 illustrates the first flow chart of the operating method for the culture medium forming apparatus.
Fig. 11 illustrates the second flow chart of the operating method for the culture medium forming apparatus.

### Description of Embodiments

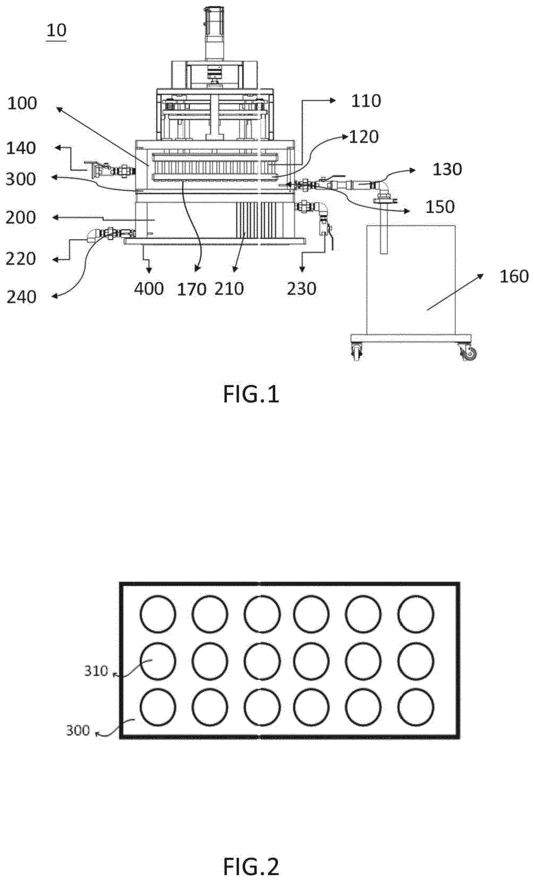

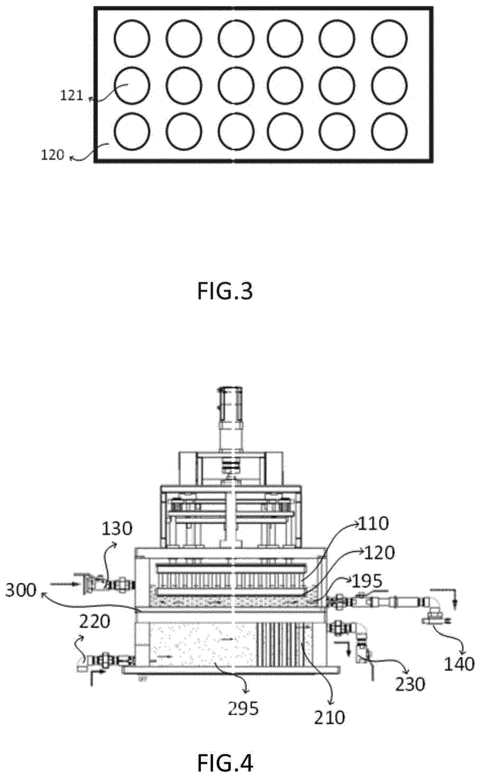

Please refer to Fig. 1~4. Fig. 1 illustrates the side view of the culture medium forming apparatus, Fig. 2 illustrates the top view of the thermal insulation element 300 showed in Fig. 1, Fig. 3 illustrates the top view of the pressing plate 120 showed in Fig. 1, and Fig. 4 illustrates the flow chart for operating the culture medium forming apparatus 10 showed in Fig. 1. The culture medium forming apparatus 10 comprises a liquid-injection chamber 100, a cooling chamber 200, a thermal insulation element 300, and a cutting element 400. The liquid-injection chamber 100 contains culture medium 195 and comprises at least one gel-pushing rod 110 and a pressing plate 120. The gel-pushing rod 110 and pressing plate 120 will be described later.

The cooling chamber 200 is located below the liquid-injection chamber 100 and comprises at least one gel-injection tube 210. The gel-injection tube 210 is located in a place for a corresponding gel-pushing rod 110. The gel-pushing rod 110 is located at the first side of the gel-injection tube 210. In an embodiment, the first side is the top side. In an embodiment, the gel-pushing rod 110 is a in a rod-like shape, such as a pressing rod. The corresponding gel-injection tube 210 is hollow and in a tube-like shape, and the gel-pushing rod 110 is just allowed to enter the gel-injection tube 210 in size.

It should be noticed, although the culture medium 195 in the liquid-injection chamber 100 is liquid, the culture medium 195 becomes gel after entering the gel-injection tube 210 in the cooling chamber 200 (from the flowable state of liquid to the un-flowable state of gel). Besides, the pressing plate 120 comprises the sealing element 170 located at the side facing the thermal insulation element 300 for seamless connection to the first through hole 310, in case the culture medium 195 overflows out of the junction of the pressing plate 120 and the first through hole 310 when the gel-pushing rod 110 pushes too hard. Referring to Fig. 3, the pressing plate 120 comprises multiple second through holes 121, just allowing the gel-pushing rod 110 to move top and down for pushing the culture medium 195 into the gel-injection tube 210 in size.

Further, liquid-injection chamber 100 comprises a liquid inlet port 130, a liquid outlet port 140, and a thermometer 150. The liquid inlet port 130 provides the culture medium 195 in the flowable state. In an embodiment, the culture medium 195 comprises the nutrients for the plant's growth and agar. Agar's liquid state can be changed to be the gel state by changing the temperature.

The liquid inlet port 130 and the liquid outlet port 140 are respectively connected to the liquid storage container 160 to maintain the culture medium 195 in the flowable state from the liquid inlet port 130 of the liquid storage container 160 to the liquid-injection chamber 100 continuously. When the height of the liquid level of the culture medium 195 in the liquid-injection chamber 100 is above the height of the liquid outlet port 140, the culture medium 195 flows back to the liquid storage container 160 through the liquid outlet port 140. For mass production, it is necessary to maintain continuous operation and output. Therefore, the arrangement of the liquid storage container 160 containing the culture medium 195 can provide enough culture medium 195 for the liquid-injection chamber 100 to continuously output the shaped culture medium 195 from the rear end of the gel-injection tube 210.

Further, the liquid storage container 160 comprises a heating apparatus for heating the culture medium 195 in the liquid storage container 160 to maintain the liquid state.

The first thermometer 150 monitors the temperature of the culture medium 195 to determine if the culture medium 195 is in the liquid state (the operation is getting difficult for the gel state in low temperature.). It should be noticed the gel state means un-flowable relative to the liquid state, but not in the solid state.

Further, the cooling chamber 200 comprises a cooling liquid inlet port 220, a cooling liquid outlet port 230, and the second thermometer 240. The cooling liquid inlet port 220 provides the cooling material (such as refrigerant or cold water) for forming the culture medium 195 to be gel. The second thermometer 240 monitors the temperature of the cooling chamber 200 to assure the cooling material can gradually cool down the culture medium 195 in the cooling chamber 200 and therefore the culture medium 195 gradually comes to the gel state from the liquid state. Eventually, the culture medium 195 comes to the gel state comprising a fixed shape at the rear end of the gel-injection tube 210. Besides, the liquid storage container 160 comprises the third thermometer to monitor the temperature of the liquid storage container 160. If the temperature of the liquid storage container 160 is not high enough, the heating apparatus is started.

The thermal insulation element 300 is located between the liquid-injection chamber 100 and the cooling chamber 200. The thermal insulation element 300 comprises at least one first through hole 310 allowing the gel-pushing rod 110 to pass through. The thermal insulation element 300 comprises multiple first through holes 310, just allowing the gel-pushing rod 110 to move up and down for pushing the culture medium 195 into the gel-injection tube 210 in size. Meanwhile, the thermal insulation element 300 isolates the thermal energy not to transfer between the liquid-injection chamber 100 and the cooling chamber 200 for preventing the culture medium 195 in the liquid-injection chamber 100, close to the cooling chamber 200, from becoming in the gel state. The culture medium 195 in the gel state is not easy to be injected. Therefore, the thermal insulation element 300 comprises a thickness, 1~2 cm as required. In an embodiment, the second side (bottom side) of the first through hole 310 is in contact with the gel-injection tube 210. When the gel-pushing rod 110 pushes downward, the culture medium 195 is injected into the gel-injection tube 210.

The cutting element 400 is located below the cooling chamber 200, precisely, below the gel-injection tube 210. When the culture medium 195 comes to the stage, it is in the solid state and comprises a stable appearance. Through the cutting element 400, the protrusion part of the culture medium 195, out of the gel-injection tube 210, is cut to a specific size for outputting the solid culture medium.

Further, the culture medium forming apparatus 10 comprises a power unit located above the liquid-injection chamber 100 for driving the gel-pushing rod 110 and pressing plate 120 in the liquid-injection chamber 100. In an embodiment, they are driven by the pneumatic cylinder and pressing lever.

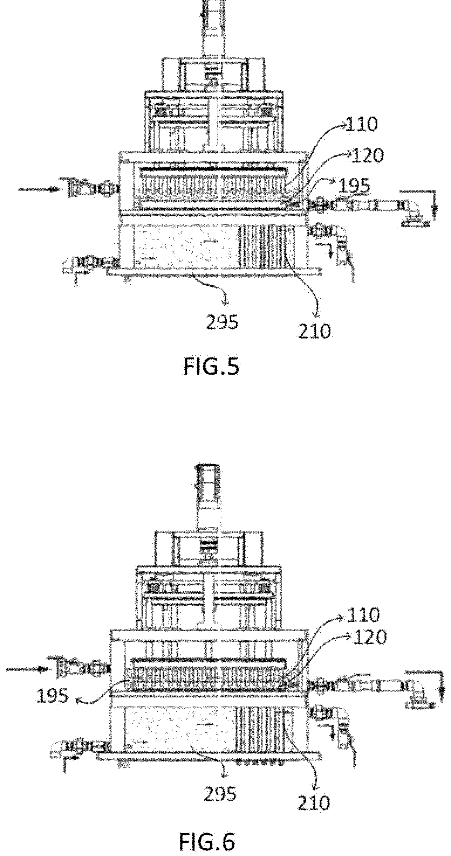

Please refer to Fig. 4~9, illustrating the operating of the culture medium forming apparatus 10. And please refer to Fig. 1~3, but the mentioned elements are not described again. At first, referring to Fig. 4, the liquid inlet port 130 provides the culture medium in the liquid state. It should be noticed, the gel-pushing rod 110 is movable and located in the first through hole 310 of the pressing plate 120. Next, referring to Fig. 5, the pressing plate 120 starts pressing downward until the first through hole 310 is in contact with the second through hole 121.

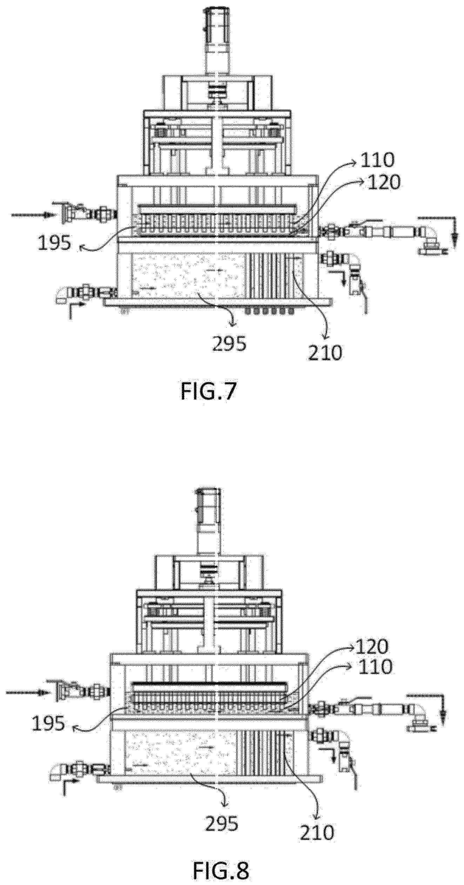

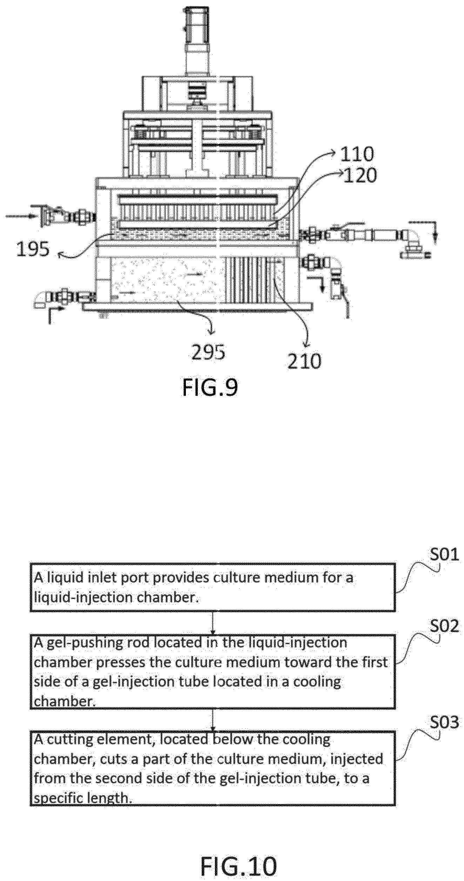

Next, referring to Fig. 6, the gel-pushing rod 110 starts pressing downward for pushing the culture medium 195 in the liquid state into the gel-injection tube 210. Next, referring to Fig. 7, the cutting element 400 cuts the protrusion part of the culture medium 195, injected from the gel-injection tube 210, to a specific size to form as the product to a specific size in the gel state. Basically, the operation for the production ends in this stage. Next, referring to Fig. 8, the pressing plate 120 moves upward, back to the original position. Next, referring to Fig. 9, the gel-pushing rod 110 moves upward, back to the original position. At this moment, the gel-pushing rod 110 and the pressing plate 120 go back to the initial positions as referred in Fig. 4.

In the embodiment, the gel-injection tube 210 is located vertically. Therefore, the gel-pushing rod 110 and the pressing plate 120 move up and down repeatedly as well, but not limited to the above way. The gel-injection tube 210 can be located horizontally, and the gel-pushing rod 110 and the pressing plate 120 move left and right repeatedly.

Fig. 10 illustrates the first flow chart for operating the culture medium forming apparatus 10. Please refer Fig. 1~9 for the element numbers mentioned in the flow chart. First, in step S01, the liquid inlet port 130 provides the culture medium 195 for the liquid-injection chamber 100. Next, in step S02, the gel-pushing rod 110 located in the liquid-injection chamber 100 presses the culture medium 195 toward the first side of the gel-injection tube 210 located in the cooling chamber 200. Next, in step S03, the cutting element 400, located below the cooling chamber 200, cuts a part of the culture medium 195, injected from the second side of the gel-injection tube 210, to a specific length.

The cooling chamber comprises a cooling liquid inlet port and a cooling liquid outlet port to supply the cooling liquid for the cooling chamber through the cooling liquid inlet port, and discharge the cooling liquid from the cooling liquid outlet port.

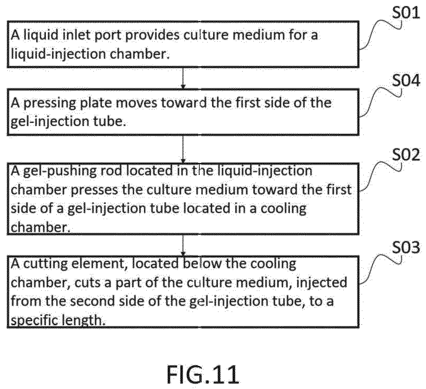

Fig. 11 illustrates the second flow chart for operating the culture medium forming apparatus 10. Please refer Fig. 1~9 for the element numbers mentioned in the flow chart. The difference distinguished from the first flow charts is described as below. There is a pressing plate 120 comprising at least one second through hole 121 corresponding to the gel-pushing rod 110. Before the gel-pushing rod 110 moves toward the gel-injection tube 210, that is prior to step S02, step 04 is executed by moving the pressing plate 120 toward the first side of the gel-injection tube 210. And then the product's quality of the culture medium 195 can be increased.

In an embodiment, after step S03, the cutting element 400 cutting the culture medium 195 injected from the second side of the gel-injection tube 210 to a specific length, there is a step can be executed that the pressing plate 120 moves back to the initial position and then the gel-pushing rod 110 moves back to the initial position. When the gel-pushing rod 110 moves upward away from the gel-injection tube 210, there is a vacuum area formed to cause the culture medium 195, injected to the gel-injection tube 210, to be suck back to the pressing plate 120. And then a hollow area is formed in the gel-injection tube 210. Therefore, the pressing plate 120 moves back to the initial position and then the gel-pushing rod 110 moves back to the initial position. It can prevent a hollow area from forming in the gel-injection tube 210.

For the two flow charts mentioned above, a step can be optionally executed after step 01: a thermal insulation element 300 is located between the liquid-injection chamber 100 and the cooling chamber 200, characterized in that the thermal insulation element 300 further comprises a vacuum chamber.

Besides, the operation method of the culture medium forming apparatus 10 can comprises the following step: a liquid storage container and liquid culture medium are provided, and the liquid culture medium is injected to the liquid storage container through the liquid inlet port; and a heating apparatus is started to heat the culture medium in the liquid storage container to maintain the culture medium in the liquid state.

## Claims

1. A culture medium (195) forming apparatus (10), comprising:
a liquid-injection chamber (100), containing a culture medium (195) and comprising a gel-pushing rod (110);
a cooling chamber (200), located below the liquid-injection chamber (100), and comprising a gel-injection tube (210), wherein the gel-injection tube (210) is located corresponding to the gel-pushing rod (110), and the gel-pushing rod (110) locates at a first side of the gel-injection tube (210);
a cutting element (400), located below the cooling chamber (200),
wherein the gel-pushing rod (110) is capable of pushing the culture medium (195) to pass through the gel-injection tube (210);
**characterized in that** it further comprises a thermal insulation element (300), located between the liquid-injection chamber (100) and the cooling chamber (200), and comprising a first through hole (310), wherein the gel-pushing rod (110) can pass through the first through hole (310).

2. The culture medium (195) forming apparatus (10) as in claim 1, **characterized in that** the liquid-injection chamber (100) comprises:
a liquid inlet port (130), for supplying the culture medium (195); and
a liquid outlet port (140), outputting the culture medium (195).

3. The culture medium (195) forming apparatus (10) as in claim 2, further comprising a liquid storage container (160) connected to the liquid inlet port (130) and the liquid outlet port (140).

4. The culture medium (195) forming apparatus (10) as in claim 3, **characterized in that** the liquid storage container (160) comprises a heating apparatus, for heating the culture medium (195) in the liquid storage container (160).

5. The culture medium (195) forming apparatus (10) as in claim 2, further comprising a first thermometer (150), located in the liquid outlet port (140), for measuring a temperature of the culture medium (195).

6. The culture medium (195) forming apparatus (10) as in claim 1, **characterized in that** the cooling chamber (200) comprises:
a cooling liquid inlet port (130), for providing a cooling liquid; and
a cooling liquid outlet port (140), for discharging the cooling liquid.

7. The culture medium (195) forming apparatus (10) as in claim 6, further comprising a second thermometer (240), for measuring a temperature of the cooling liquid.

8. The culture medium (195) forming apparatus (10) as in claim 3, **characterized in that** the liquid storage container (160) comprises a third thermometer, for measuring a temperature of the liquid storage container (160).

9. The culture medium (195) forming apparatus (10) as in claim 1, further comprising a pressing plate (120), **characterized in that** the pressing plate (120) comprises a second through hole (121) corresponding to the gel-pushing rod (110), and the gel-pushing rod (110) is capable of passing through the second through hole (121).

10. The culture medium (195) forming apparatus (10) as in claim 9, **characterized in that** the pressing plate (120) comprises a sealing element (170) at a side facing the thermal insulation element (300).

11. The culture medium (195) forming apparatus (10) as in claim 1, **characterized in that** the thermal insulation element (300) comprises a vacuum chamber.

12. The culture medium (195) forming apparatus (10) as in claim 9, further comprising a power unit, for driving the gel-pushing rod (110) and the pressing plate (120) in the liquid-injection chamber (100).

13. A method for operating a culture medium (195) forming apparatus (10) according to any of claims 1-12, comprising:
a liquid inlet port (130) providing a culture medium (195) for a liquid-injection chamber (100) ;
a gel-pushing rod (110) pushing the culture medium (195) toward a first side of a gel-injection tube (210), wherein the gel-pushing rod (110) is in the liquid-injection chamber (100), the gel-injection tube (210) is in a cooling chamber (200), and the cooling chamber (200) is below the liquid-injection chamber (100);
a cutting element (400) cutting a part of the culture medium (195) injected from a second side of the gel-injection tube (210) in a length;
**characterized in that** the method further comprises:
providing a thermal insulation element (300) between the liquid-injection chamber (100) and the cooling chamber (200),
wherein the thermal insulation element (300) comprises a vacuum chamber.

14. The method as in claim 13, further comprising:
providing a cooling liquid inlet port (130) and a cooling liquid outlet port (140) for the cooling chamber (200), **characterized in that** the cooling liquid inlet port (130) supplies a cooling liquid for the cooling chamber (200), and the cooling liquid outlet port (140) discharges the cooling liquid.

15. The method as in claim 13, further comprising:
providing a pressing plate (120), **characterized in that** the pressing plate (120) comprises a second through hole (121) corresponding to a gel-pushing rod (110), and the gel-pushing rod (110) is capable of passing through the second through hole (121),
**characterized in that** the pressing plate (120) moves toward the gel-injection tube (210) before the gel-pushing rod (110) moves toward the gel-injection tube (210).

16. The method as in claim 15, further comprising:
providing a sealing element (170) on the thermal insulation element (300) at a side facing the pressing plate (120), seamlessly connected to the first through hole (310).

17. The method as in claim 15, **characterized in that** the pressing plate (120) moves back before the gel-pushing rod (110) moves back, after the cutting element (400) cutting the part of the culture medium (195) injected from the second side of the gel-injection tube (210) in the length.

18. The method as in claim 13, further comprising:
providing a liquid storage container (160):
providing the culture medium (195) in a liquid state;
supplying the culture medium (195) in the liquid state for the liquid-injection chamber (100) through the liquid inlet port (130).

19. The method as in claim 18, further comprising:
starting a heating apparatus, for heating the culture medium (195) in the liquid storage container (160).

## Patentansprüche

1. Vorrichtung (10) zur Bildung eines Kulturmediums (195), umfassend:
eine Flüssigkeitsinjektionskammer (100), die ein Kulturmedium (195) enthält und eine Gel-Schubstange (110) umfasst;
eine Kühlkammer (200), die sich unterhalb der Flüssigkeitsinjektionskammer (100) befindet und ein Gel-Injektionsrohr (210) umfasst, wobei sich das Gel-Injektionsrohr (210) entsprechend der Gel-Schubstange (110) angeordnet ist und die Gel-Schubstange (110) an einer ersten Seite des Gel-Injektionsrohrs (210) angeordnet ist;
ein Schneidelement (400), das unterhalb der Kühlkammer (200) angeordnet ist,
wobei die Gel-Schubstange (110) in der Lage ist, das Kulturmedium (195) durch das Gel-Injektionsrohr (210) zu schieben;
**dadurch gekennzeichnet, dass** es ferner ein Wärmeisolationselement (300) umfasst, das zwischen der Flüssigkeitsinjektionskammer (100) und der Kühlkammer (200) angeordnet ist und ein erstes Durchgangsloch (310) umfasst, wobei die Gel-Schubstange (110) durch das erste Durchgangsloch (310) hindurchlaufen kann.

2. Vorrichtung (10) zur Bildung eines Kulturmediums (195) nach Anspruch 1, **dadurch gekennzeichnet, dass** die Flüssigkeitsinjektionskammer (100) umfasst:
einen Flüssigkeitseinlassanschluss (130) zum Zuführen des Kulturmediums (195); und
einen Flüssigkeitsauslassanschluss (140), der das Kulturmedium (195) ausgibt.

3. Vorrichtung (10) zur Bildung eines Kulturmediums (195) nach Anspruch 2, die ferner einen Flüssigkeitsspeicherbehälter (160) umfasst, der mit dem Flüssigkeitseinlassanschluss (130) und dem Flüssigkeitsauslassanschluss (140) verbunden ist.

4. Vorrichtung (10) zur Bildung eines Kulturmediums (195) nach Anspruch 3, **dadurch gekennzeichnet, dass** der Flüssigkeitsspeicherbehälter (160) eine Heizvorrichtung zum Erwärmen des Kulturmediums (195) in dem Flüssigkeitsspeicherbehälter (160) umfasst.

5. Vorrichtung (10) zur Bildung eines Kulturmediums (195) nach Anspruch 2, die ferner ein erstes Thermometer (150) umfasst, das in dem Flüssigkeitsauslassanschluss (140) angeordnet ist, um eine Temperatur des Kulturmediums (195) zu messen.

6. Vorrichtung (10) zur Bildung eines Kulturmediums (195) nach Anspruch 1, **dadurch gekennzeichnet, dass** die Kühlkammer (200) umfasst:
einen Kühlflüssigkeitseinlassanschluss (130) zum Bereitstellen einer Kühlflüssigkeit; und
einen Kühlflüssigkeitsauslassanschluss (140) zum Abgeben der Kühlflüssigkeit.

7. Vorrichtung (10) zur Bildung eines Kulturmediums (195) nach Anspruch 6, die ferner ein zweites Thermometer (240) umfasst, um eine Temperatur der Kühlflüssigkeit zu messen.

8. Vorrichtung (10) zur Bildung eines Kulturmediums (195) nach Anspruch 3, **dadurch gekennzeichnet, dass** der Flüssigkeitsspeicherbehälter (160) ein drittes Thermometer umfasst, um eine Temperatur des Flüssigkeitsspeicherbehälters (160) zu messen.

9. Vorrichtung (10) zur Bildung eines Kulturmediums (195) nach Anspruch 1, die ferner eine Druckplatte (120) umfasst, **dadurch gekennzeichnet, dass** die Druckplatte (120) ein zweites Durchgangsloch (121) umfasst, das der Gel-Schubstange (110) entspricht, und die Gel-Schubstange (110) in der Lage ist, durch das zweite Durchgangsloch (121) hindurchzulaufen.

10. Vorrichtung (10) zur Bildung eines Kulturmediums (195) nach Anspruch 9, **dadurch gekennzeichnet, dass** die Druckplatte (120) an einer dem Wärmeisolationselement (300) zugewandten Seite ein Dichtungselement (170) umfasst.

11. Vorrichtung (10) zur Bildung eines Kulturmediums (195) nach Anspruch 1, **dadurch gekennzeichnet, dass** das Wärmeisolationselement (300) eine Vakuumkammer umfasst.

12. Vorrichtung (10) zur Bildung eines Kulturmediums (195) nach Anspruch 9, die ferner eine Antriebseinheit zum Antreiben der Gel-Schubstange (110) und der Druckplatte (120) in der Flüssigkeitsinjektionskammer (100) umfasst.

13. Verfahren zum Betreiben einer Vorrichtung (10) zur Bildung eines Kulturmediums (195) nach einem der Ansprüche 1 bis 12, umfassend:
einen Flüssigkeitseinlassanschluss (130), der ein Kulturmedium (195) für eine Flüssigkeitsinjektionskammer (100) bereitstellt;
eine Gel-Schubstange (110), die das Kulturmedium (195) in Richtung einer ersten Seite eines Gel-Injektionsrohrs (210) schiebt, wobei sich die Gel-Schubstange (110) in der Flüssigkeitsinjektionskammer (100) befindet, wobei sich das Gel-Injektionsrohr (210) in einer Kühlkammer (200) befindet und sich die Kühlkammer (200) unterhalb der Flüssigkeitsinjektionskammer (100) befindet;
ein Schneidelement (400), das einen Teil des aus einer zweiten Seite des Gel-Injektionsrohrs (210) injizierten Kulturmediums (195) in Längsrichtung schneidet;
**dadurch gekennzeichnet, dass** das Verfahren ferner umfasst:
Bereitstellen eines Wärmeisolationselements (300) zwischen der Flüssigkeitsinjektionskammer (100) und der Kühlkammer (200),
wobei das Wärmeisolationselement (300) eine Vakuumkammer umfasst.

14. Verfahren nach Anspruch 13, das ferner umfasst:
Bereitstellen eines Kühlflüssigkeitseinlassanschlusses (130) und eines Kühlflüssigkeitsauslassanschlusses (140) für die Kühlkammer (200), **dadurch gekennzeichnet, dass** der Kühlflüssigkeitseinlassanschluss (130) eine Kühlflüssigkeit für die Kühlkammer (200) zuführt und der Kühlflüssigkeitsauslassanschluss (140) die Kühlflüssigkeit abgibt.

15. Verfahren nach Anspruch 13, ferner umfassend:
Bereitstellen einer Druckplatte (120), **dadurch gekennzeichnet, dass** die Druckplatte (120) ein zweites Durchgangsloch (121) umfasst, das einer Gel-Schubstange (110) entspricht, und die Gel-Schubstange (110) in der Lage ist, durch das zweite Durchgangsloch (121) hindurchzulaufen,
**dadurch gekennzeichnet, dass** sich die Druckplatte (120) in Richtung des Gel-Injektionsrohrs (210) bewegt, bevor sich die Gel-Schubstange (110) in Richtung des Gel-Injektionsrohrs (210) bewegt.

16. Verfahren nach Anspruch 15, ferner umfassend:
Bereitstellen, auf dem Wärmeisolationselement (300) an einer der Druckplatte (120) zugewandten Seite, eines Dichtungselements (170), das nahtlos mit dem ersten Durchgangsloch (310) verbunden ist.

17. Verfahren nach Anspruch 15, **dadurch gekennzeichnet, dass** sich die Druckplatte (120) zurückbewegt, bevor sich die Gel-Schubstange (110) zurückbewegt, nachdem das Schneidelement (400) den Teil des Kulturmediums (195) geschnitten hat, der aus der zweiten Seite des Gel-Injektionsrohrs (210) in Längsrichtung injiziert wurde.

18. Verfahren nach Anspruch 13, ferner umfassend:
Bereitstellen eines Flüssigkeitsspeicherbehälters (160);
Bereitstellen des Kulturmediums (195) in einem flüssigen Zustand;
Zuführen des Kulturmediums (195) in flüssigem Zustand für die Flüssigkeitsinjektionskammer (100) durch den Flüssigkeitseinlassanschluss (130).

19. Verfahren nach Anspruch 18, ferner umfassend:
Starten einer Heizvorrichtung zum Erwärmen des Kulturmediums (195) in dem Flüssigkeitsspeicherbehälter (160).

## Revendications

1. Appareil (10) de formation de milieu de culture (195), comprenant :
une chambre (100) d'injection de liquide, contenant un milieu de culture (195) et comprenant une tige (110) de poussée de gel ;
une chambre (200) de refroidissement, située sous la chambre (100) d'injection de liquide, et comprenant un tube (210) d'injection de gel, le tube (210) d'injection de gel étant situé en correspondance avec la tige (110) de poussée de gel, et la tige (110) de poussée de gel étant située au niveau d'un premier côté du tube (210) d'injection de gel ;
un élément de coupe (400), situé sous la chambre (200) de refroidissement,
dans lequel la tige (110) de poussée de gel est capable de pousser le milieu de culture (195) pour qu'il passe à travers le tube (210) d'injection de gel ;
**caractérisé en ce qu'**il comprend en outre un élément (300) d'isolation thermique, situé entre la chambre (100) d'injection de liquide et la chambre (200) de refroidissement, et comprenant un premier trou traversant (310), la tige (110) de poussée de gel pouvant passer à travers le premier trou traversant (310).

2. Appareil (10) de formation de milieu de culture (195) selon la revendication 1, **caractérisé en ce que** la chambre (100) d'injection de liquide comprend :
un orifice (130) d'entrée de liquide, destiné à l'alimentation en milieu de culture (195) ; et
un orifice (140) de sortie de liquide, destiné au soutirage du milieu de culture (195).

3. Appareil (10) de formation de milieu de culture (195) selon la revendication 2, comprenant en outre un récipient (160) de stockage de liquide relié à l'orifice (130) d'entrée de liquide et à l'orifice (140) de sortie de liquide.

4. Appareil (10) de formation de milieu de culture (195) selon la revendication 3, **caractérisé en ce que** le récipient (160) de stockage de liquide comprend un appareil de chauffage, destiné à chauffer le milieu de culture (195) dans le récipient (160) de stockage de liquide.

5. Appareil (10) de formation de milieu de culture (195) selon la revendication 2, comprenant en outre un premier thermomètre (150), situé dans l'orifice (140) de sortie de liquide, destiné à mesurer une température du milieu de culture (195).

6. Appareil (10) de formation de milieu de culture (195) selon la revendication 1, **caractérisé en ce que** la chambre (200) de refroidissement comprend :
un orifice (130) d'entrée de liquide de refroidissement, destiné à l'alimentation en liquide de refroidissement ; et
un orifice (140) de sortie de liquide de refroidissement, destiné à évacuer le liquide de refroidissement.

7. Appareil (10) de formation de milieu de culture (195) selon la revendication 6, comprenant en outre un deuxième thermomètre (240) destiné à mesurer une température du liquide de refroidissement.

8. Appareil (10) de formation de milieu de culture (195) selon la revendication 3, **caractérisé en ce que** le récipient (160) de stockage de liquide comprend un troisième thermomètre destiné à mesurer une température du récipient (160) de stockage de liquide.

9. Appareil (10) de formation de milieu de culture (195) selon la revendication 1, comprenant en outre une plaque de pression (120), **caractérisé en ce que** la plaque de pression (120) comprend un second trou traversant (121) correspondant à la tige (110) de poussée de gel, et la tige (110) de poussée de gel est capable de passer à travers le second trou traversant (121).

10. Appareil (10) de formation de milieu de culture (195) selon la revendication 9, **caractérisé en ce que** la plaque de pression (120) comprend un élément d'étanchéité (170) au niveau d'un côté faisant face à l'élément (300) d'isolation thermique.

11. Appareil (10) de formation de milieu de culture (195) selon la revendication 1, **caractérisé en ce que** l'élément (300) d'isolation thermique comprend une chambre à vide.

12. Appareil (10) de formation de milieu de culture (195) selon la revendication 9, comprenant en outre une unité d'alimentation destinée à entraîner la tige (110) de poussée de gel et la plaque de pression (120) dans la chambre (100) d'injection de liquide.

13. Procédé de fonctionnement d'un appareil (10) de formation de milieu de culture (195) selon l'une quelconque des revendications 1 à 12, comprenant :
un orifice (130) d'entrée de liquide alimentant une chambre (100) d'injection de liquide en milieu de culture (195),
une tige (110) de poussée de gel poussant le milieu de culture (195) vers un premier côté d'un tube (210) d'injection de gel, la tige (110) de poussée de gel étant située dans la chambre (100) d'injection de liquide, le tube (210) d'injection de gel étant situé dans une chambre (200) de refroidissement et la chambre (200) de refroidissement étant située en dessous de la chambre (100) d'injection de liquide ;
un élément de coupe (400) coupant une partie du milieu de culture (195) injecté depuis un second côté du tube (210) d'injection de gel sur une certaine longueur ;
le procédé étant **caractérisé en ce qu'**il comprend en outre :
la fourniture d'un élément (300) d'isolation thermique entre la chambre (100) d'injection de liquide et la chambre (200) de refroidissement,
dans lequel l'élément (300) d'isolation thermique comprend une chambre à vide.

14. Procédé selon la revendication 13, comprenant en outre :
la fourniture d'un orifice (130) d'entrée de liquide de refroidissement et d'un orifice (140) de sortie de liquide de refroidissement destinés à la chambre de refroidissement (200), **caractérisé en ce que** l'orifice (130) d'entrée de liquide de refroidissement alimente la chambre (200) de refroidissement en liquide de refroidissement, et l'orifice (140) de sortie de liquide de refroidissement évacue le liquide de refroidissement.

15. Procédé selon la revendication 13, comprenant en outre :
la fourniture d'une plaque de pression (120), **caractérisé en ce que** la plaque de pression (120) comprend un second trou traversant (121) correspondant à une tige (110) de poussée de gel, et la tige (110) de poussée de gel est capable de passer à travers le second trou traversant (121),
**caractérisé en ce que** la plaque de pression (120) se déplace vers le tube (210) d'injection de gel avant que la tige (110) de poussée de gel ne se déplace vers le tube (210) d'injection de gel.

16. Procédé selon la revendication 15, comprenant en outre :
la fourniture d'un élément d'étanchéité (170) sur l'élément (300) d'isolation thermique au niveau d'un côté faisant face à la plaque de pression (120), relié de manière continue au premier trou traversant (310).

17. Procédé selon la revendication 15, **caractérisé en ce que** la plaque de pression (120) recule avant que ne recule la tige (110) de poussée du gel, après que l'élément de coupe (400) ait coupé la partie du milieu de culture (195) injectée depuis le second côté du tube d'injection de gel (210) dans le sens de la longueur.

18. Procédé selon la revendication 13, comprenant en outre :
la fourniture d'un récipient (160) de stockage de liquide ;
la fourniture du milieu de culture (195) à l'état liquide ;
l'alimentation en milieu de culture (195) à l'état liquide de la chambre (100) d'injection de liquide par l'intermédiaire de l'orifice (130) d'entrée de liquide.

19. Procédé selon la revendication 18, comprenant en outre :
le démarrage d'un appareil de chauffage, destiné à chauffer le milieu de culture (195) dans le récipient (160) de stockage de liquide.
